(19) Europäisches Patentamt
European Patent Office
Office européen des brevets

(11) **EP 4 215 402 A1**

(12) **EUROPEAN PATENT APPLICATION**

(43) Date of publication:
**26.07.2023 Bulletin 2023/30**

(21) Application number: **22152424.2**

(22) Date of filing: **20.01.2022**

(51) International Patent Classification (IPC):
**B60L 1/00** *(2006.01)* **G01C 21/34** *(2006.01)*
**G01C 21/36** *(2006.01)* **B60W 50/00** *(2006.01)*

(52) Cooperative Patent Classification (CPC):
**G01C 21/3415; B60L 1/003; B60L 1/006;**
**B60L 15/2045; B60L 58/12; B60W 10/30;**
**B60W 50/0097; B60W 50/08; G01C 21/3469;**
**G01C 21/3697; B60L 2240/12; B60L 2240/34;**
B60L 2240/622; B60L 2250/12; B60L 2250/16;

(Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **VOLVO TRUCK CORPORATION**
**405 08 Göteborg (SE)**

(72) Inventor: **ASKERDAL, Mikael**
**439 51 ÅSA (SE)**

(74) Representative: **Zacco Sweden AB**
**P.O. Box 5581**
**Löjtnantsgatan 21**
**114 85 Stockholm (SE)**

(54) **PROCESSING UNIT FOR MANAGING ENERGY CONSUMPTION IN A VEHICLE AND METHOD THEREFOR**

(57) A method performed by a processing unit for managing energy consumption in a vehicle along a first route from a source location to a first target destination. The method comprises estimating an energy consumption, $E_{PC}$, of the vehicle travelling from the source location to the first target destination along the first route. It also comprises obtaining, in case the amount of energy, $E_{TOTAL}$, available in the vehicle is not on a level above Ec that ensures arrival of the vehicle at the first target destination according to a first determined level of certainty, an estimated energy consumption, $E_{AUX}$, of each auxiliary system on-board the vehicle for the first route, and an energy utilization information, $EU_{INFO}$, indicating a priority level of each auxiliary system on-board the vehicle for the first route. It further comprises determining an energy consumption adaption sequence of the auxiliary systems for the first route based on the obtained $E_{AUX}$ and $EU_{INFO}$ of each auxiliary system such that $E_{TOTAL}$ is maintained on a level above $E_{PC}$ that ensures arrival of the vehicle at the first target destination according to a second determined level of certainty.

FIG. 2

(52) Cooperative Patent Classification (CPC): (Cont.)
B60L 2260/52; B60L 2260/54; B60W 2050/009;
B60W 2510/24

**Description**

TECHNICAL FIELD

Embodiments herein relate in general to managing energy consumption in a vehicle. In particular, embodiments herein relate to a processing unit and a method therein for managing energy consumption in a vehicle along a first route from a source location to a first target destination. Also, embodiments herein also relate to a computer program product, a carrier and a vehicle.

BACKGROUND

In most Electric Vehicles, EV, today, the responsibility of managing the energy consumption in the EV so that there is always a sufficient amount of energy left in the vehicle to ensure that a target destination may be reached is left to the driver of the vehicle. In some cases, the driver may be asked to select a driving mode of the EV from a selected number of driving modes, such as e.g. a range mode. When, for example, a range mode is selected, the EV will prioritize range and may switch off or reduce the electric consumption other vehicle systems regarded as less important than fulfilling the range. This way of solving the problem of having sufficient amount of energy left in the vehicle to ensure that a target destination may be reached relies on the driver's ability to accurately predict when there is a range problem. Since determining if there is a range problem normally is a complicated and difficult task for a driver of the EV, there is a high likelihood that the range mode will be selected and used in many cases where the range mode is, for example, not needed, not used at all or used too late. Here, the impact of selecting and using the range mode too often may normally be poor comfort, poor performance, increased component wear etc., while the impact of selecting and using the range mode too rarely may be unwanted stops where towing or charging assistance will be needed. Hence, leaving it up to the driver of the EV to perform the selection may not always be the best solution.

For other more predictive energy management solutions, it should be noted that the aim is often to minimize the total energy consumption of the EV. This means that the predictive energy management will do so even if the range is sufficient anyway and does not help very well in other situations where the range is more of a problem. Furthermore, this type of predictive energy management typically works best in conditions which are easy to predict, such as, e.g. nice weather and low traffic. In these cases, the range of the EV is normally long and the likelihood of running into range problems should be fairly low. However, during less ideal conditions, such as, bad weather and high traffic, this type of predictive energy management normally performs poorly.

SUMMARY

It is an object of embodiments herein to provide a processing unit and a method therein, along with a computer program product and carrier, for managing energy consumption in a vehicle along a first route from a source location to a first target destination that seeks to mitigate, alleviate, or eliminate all or at least some of the above-discussed drawbacks of presently known solutions.

According to a first aspect of embodiments herein, the object is achieved by a method in a processing unit for managing energy consumption in a vehicle along a first route from a source location to a first target destination. The method comprises estimating a propulsion energy consumption, $E_{PC}$, of the vehicle travelling from the source location to the first target destination along the first route. The method also comprises obtaining, in case the amount of energy, $E_{TOTAL}$, available in the vehicle is not on a level above $E_{PC}$ that ensures arrival of the vehicle at the first target destination according to a first determined level of certainty, an estimated energy consumption, $E_{AUX}$, of each auxiliary system on-board the vehicle for the first route. Here, the method will also obtain an energy utilization information, $EU_{INFO}$, indicating a priority level of each auxiliary system on-board the vehicle for the first route. Further, the method comprises determining an energy consumption adaptation sequence of the auxiliary systems for the first route based on the obtained $E_{AUX}$ and $EU_{INFO}$ of each auxiliary system such that $E_{TOTAL}$ is maintained on a level above $E_{PC}$ that ensures arrival of the vehicle at the first target destination according to a second determined level of certainty.

By determining an energy consumption adaption sequence of the auxiliary systems for the first route as described above, the utility of the auxiliary systems of the vehicle may be improved for the first route by controlling the energy consumption of the auxiliary systems such that there is a sufficient range or energy left in the vehicle to reach the first target destination. In other words, $E_{TOTAL}$ is maintained on a level above $E_{PC}$ that ensures arrival of the vehicle at the first target destination according to a second determined level of certainty. Hence, the actual energy consumption may be adjusted to provide a sufficient range or energy in order for the vehicle to be able to reach a target destination with a determined level of certainty. This is in contrast to other prior art solutions that will adjust the energy consumption to provide maximum range or energy.

In some embodiments, the method may comprise receiving, via a user interface, user input from a driver of the vehicle indicating the priority level of one or more of the auxiliary systems for the first route, and determining $EU_{INFO}$ at least partly based on the received user input. This means that the driver may provide some specific mission priorities that should be adhered to along the first route from the source location to the first target destination. For example, in case of a vaccine transport, it may be very important that an auxiliary system controlling a freezing compartment in the trailer in which the vaccine is stored at a safe temperature always has enough power for the first route. Otherwise, it may not matter if the vehicle has enough power to reach the first target destination, since the mission will have failed anyway in that the vaccine may have been spoiled by being exposed to too hot temperatures. According to another example, in case of an urgent transport, only a few of the auxiliary systems may be needed at all and most of the available power may be used in order to ensure a fast and reliant arrival at the first destination. In a further example, in case of a leisure transport, one or more of the auxiliary systems controlling the comfort of the driver may be prioritized since the other auxiliary systems may be not be required in this scenario.

In some embodiments, the method may also comprise determining a first required reduction in energy consumption of the auxiliary systems for the first route in order to maintain $E_{TOTAL}$ on a level above $E_{PC}$ that ensures arrival of the vehicle at the first target destination according to the second determined level of certainty. In this case, the method may further comprise determining the energy consumption adaption sequence of the auxiliary systems for the first route based on the obtained $E_{AUX}$ and $EU_{INFO}$ of each auxiliary system such that the first required reduction in energy consumption is reached. This means that the energy savings required in order to ensure that the vehicle arrives at the first target destination according to the second determined level of certainty may be determined such that the energy consumption of the auxiliary systems may be reduced by a suitable amount that is not too restrictive or too lenient. In other words, turning off or reducing the energy consumption of only those auxiliary systems that necessarily need to save energy.

In some embodiments, the method may further comprise obtaining, in case the first required reduction in energy consumption of the auxiliary systems for the first route is not enough to maintain $E_{TOTAL}$ on a level above $E_{PC}$ that ensures arrival of the vehicle at the first target destination according to the second determined level of certainty, a second route and second target destination for which a second reduction in energy consumption of the auxiliary systems for the second route is enough to maintain $E_{TOTAL}$ on a level above $E_{PC}$ that ensures arrival of the vehicle at the second target destination according to the determined level of certainty. This means that an alternative route, and also an alternate destination, may be determined in case the energy savings from reducing the energy consumption of the auxiliary systems is not enough for the first route.

In this case, the method may also comprise displaying, via the user interface, information to the driver of the vehicle indicating the second route and the second target destination. This may also be indicated to the driver so that the driver may follow the alternative route to the alternate destination so as to ensure arrival at the alternate destination with a determined level of certainty. Optionally, in some embodiments, the method may also comprise displaying, via a user interface, information indicating the determined energy consumption adaption sequence of the auxiliary systems for the first route to the driver of the vehicle. This means that the driver is informed about which auxiliary systems that will be affected by the determined energy consumption adaption sequence in order for the vehicle to be able to reach a target destination with a determined level of certainty. Furthermore, according to some embodiments, the method may also comprise displaying, via the user interface, information indicating driving assisting actions for reducing $E_{PC}$ to the driver of the vehicle. This means that the driver may, for example, be supported by suitable driving instructions that will reduce the energy consumption of the vehicle and/or auxiliary systems in order for the vehicle to be able to reach a target destination with a determined level of certainty.

In some embodiments, the auxiliary system on-board the vehicle may comprise one or more of: electronic control units (ECUs), a climate control system, a thermal Energy Storage System (ESS), an air pressure system, a Power Take-off (PTO) system and a cabin comfort system.

According to a second aspect of embodiments herein, the object is achieved by a processing unit for managing energy consumption in a vehicle along a first route from a source location to a first target destination. The processing unit is configured to estimate a propulsion energy consumption, $E_{PC}$, of the vehicle travelling from the source location (S) to the first target destination along the first route. The processing unit is also configured to obtain, in case the amount of energy, $E_{TOTAL}$, available in the vehicle is not on a level above $E_{PC}$ that ensures arrival of the vehicle at the first target destination according to a first determined level of certainty, an estimated energy consumption, $E_{AUX}$, of each auxiliary system on-board the vehicle for the first route, and an energy utilization information, $EU_{INFO}$, indicating a priority level of each auxiliary system on-board the vehicle for the first route. The processing unit is further configured to determine an energy consumption adaption sequence of the auxiliary systems for the first route based on the obtained $E_{AUX}$ and $EU_{INFO}$ of each auxiliary system such that $E_{TOTAL}$ is maintained on a level above $E_{PC}$ that ensures arrival of the vehicle at the first target destination according to a second determined level of certainty.

In some embodiments, the processing unit may be configured to receive, via a user interface, user input from a driver of the vehicle indicating the priority level of one or more of the auxiliary systems for the first route, and determine $EU_{INFO}$ at least partly based on the received user input. In some embodiments, the processing unit may be configured to determine, the processing unit may also be configured to determine a first required reduction in energy consumption of the auxiliary systems for the first route in order to maintain $E_{TOTAL}$ on a level above $E_{PC}$ that ensures arrival of the vehicle at the first target destination according to the second determined level of certainty. In this case, the processing unit may be configured to determine the energy consumption adaption sequence of the auxiliary systems for the first route based on the obtained $E_{AUX}$ and $EU_{INFO}$ of each auxiliary system such that the first required reduction in energy consumption of the auxiliary systems is reached.

In some embodiments, the processing unit may further be configured to obtain, in case the first required reduction in energy consumption of the auxiliary systems for the first route is not enough to maintain $E_{TOTAL}$ on a level above $E_{PC}$ that ensures arrival of the vehicle at the first target destination according to the second determined level of certainty, a second route and second target destination for which a second reduction in energy consumption of the auxiliary systems for the second route is enough to maintain $E_{TOTAL}$ on a level above $E_{PC}$ that ensures arrival of the vehicle at the second target destination according to the determined level of certainty.

In some embodiments, the processing unit may further be configured to display, via a user interface, one or more of: information indicating the determined energy consumption adaption sequence of the auxiliary systems for the first route to the driver of the vehicle, information to the driver of the vehicle indicating the second route and the second target destination, and information indicating driving assisting actions for reducing $E_{PC}$ to the driver of the vehicle.

In some embodiments, the auxiliary system on-board the vehicle may comprise one or more of: electronic control units (ECUs), a climate control system, a thermal Energy Storage System (ESS), an air pressure system, a Power Take-off (PTO) system and a cabin comfort system.

According to a third aspect of the embodiments herein, the object is achieved by a computer program comprising instructions which, when executed in a processing circuitry, cause the processing circuitry to carry out the methods described above. According to a fourth aspect of the embodiments herein, the object is achieved by a carrier containing the computer program described above, wherein the carrier is one of an electronic signal, optical signal, radio signal, or computer-readable storage medium. According to a sixth aspect of the embodiments herein, the object is achieved by a vehicle comprising a processing unit according to the embodiments described above.

BRIEF DESCRIPTION OF THE DRAWINGS

Features and advantages of the embodiments will become readily apparent to those skilled in the art by the following detailed description of exemplary embodiments thereof with reference to the accompanying drawings, wherein:

Fig. 1    is a side view of a vehicle,
Fig. 2    is a schematic illustration of example routes from a source location to a first or second target destination according to some embodiments,
Fig. 3    is a flowchart illustrating embodiments of a method in processing unit,
Fig. 4    is a block diagram depicting embodiments of a processing unit.

DETAILED DESCRIPTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description. It is to be understood that the present invention is not limited to the embodiments described herein and illustrated in the drawings; rather, the skilled person will recognize that many changes and modifications may be made within the scope of the appended claims.

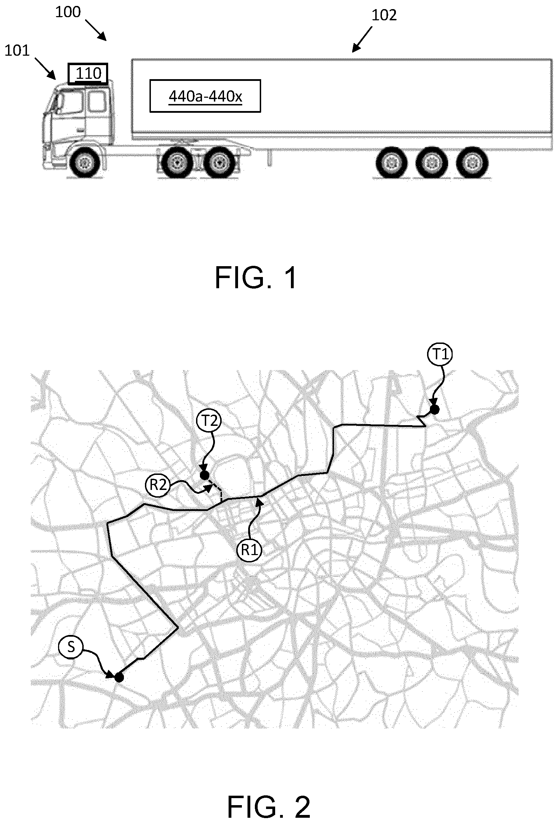

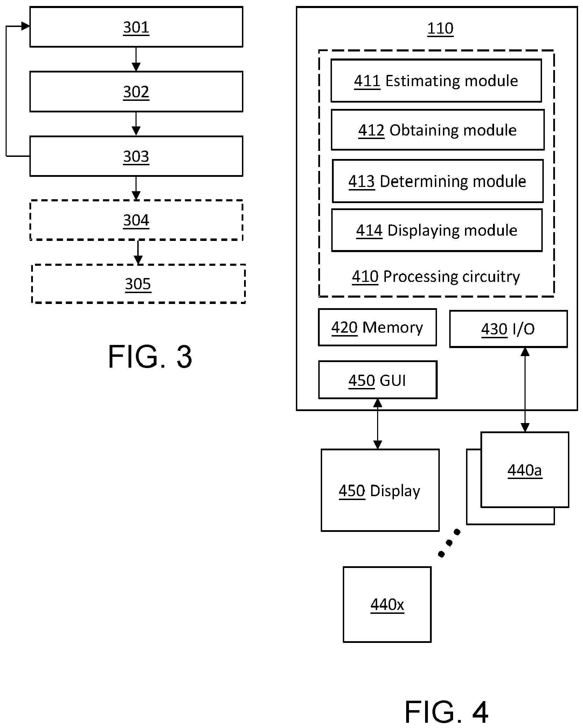

**Fig. 1** illustrates an example of a **vehicle 100.** In this case, the vehicle 100 is exemplified as a heavy-duty vehicle combination for cargo transport. The vehicle 100 exemplified in Fig. 1 comprises a **truck or towing vehicle 101** configured to tow a **trailer unit 102** in a known manner, e.g., by a fifth wheel connection. Herein, a heavy-duty vehicle is taken to be a vehicle designed for the handling and transport of heavier objects or large quantities of cargo. The vehicle 100 also comprises a **processing unit 110.** The processing unit 110 is described in more detail below with reference to Fig. 4. The vehicle 100 may further comprise any number of **auxiliary systems 440a-440x** that are connected to and consumes energy in the vehicle 100. Examples of such auxiliary systems on-board the vehicle 100 may comprise one or more of: electronic control units (ECUs), a climate control system, a thermal Energy Storage System, ESS, an air pressure system, a Power Take-off, PTO, system, and a cabin comfort system, etc.

As an example, a heavy-duty vehicle could be a semi-trailer vehicle combination, or a truck as described above. As another example, a heavy-duty vehicle could be a vehicle designed for use in construction, mining operations, and the like. It is appreciated that the embodiments disclosed herein may be applied to a wide variety of electrically powered vehicle units. For example, while the embodiments disclosed herein are also applicable in, for example, rigid trucks, working machines, multi-trailer electric heavy-duty vehicles comprising one or more dolly vehicle units, etc., the embodiments disclosed herein are also applicable for use in any electrically powered vehicle, such as, e.g. any Battery Electric Vehicles, BEVs. Thus, the embodiments herein should not be considered limited to a particular type of vehicle, but should also be considered applicable in other types of vehicles.

As part of developing the embodiments described herein, it has been realized that it would be advantageous to be able to actively control the vehicle in such a way that a sufficient range/energy is guaranteed, and not maximized. In other words, a type of predictive energy management that specifically targets sufficient range/energy.

This means that, even if the driving conditions are non-favourable, such as, poor weather or high level of traffic congestion, the vehicle may be controlled in such a way that arrival of the vehicle at its destination, or next charging opportunity, may be ensured to a certain determined level of certainty. This type of active range management would tackle the problem differently than systems resulting in a maximization of the range/energy. It would target the situations when expected range is short and do what it takes to make the range enough. It could also be used to take appropriate action when it realizes that range will be too short. For example, it could find a good place to stop on and e.g. automatically call towing service, etc. An example of such an active range management is presented below by the embodiments described herein.

**Fig. 2** illustrates a virtual map indicating a **first route R1** from a **source location S** to a **first target destination T1** that the vehicle 100 is to travel. The first target destination T1 and a first route R1 to the first target destination T1 may be predetermined by a navigation or GPS/GNSS system in a conventional manner. Also, shown is an alternate destination, i.e. **a second target destination T2,** and an alternative route to the alternate destination, i.e. **a second route R2**. This routes and destinations described in Fig. 2 will be referred to by the embodiments described below, but should only be considered for illustrative purposes and therefore not be considered limiting to the embodiments described below.

Examples of embodiments of a method performed by a processing unit 110 for managing energy consumption in a vehicle 100 along a first route R1 from a source location S to a first target destination T1, will now be described with reference to the flowchart depicted in **Fig. 3.** Fig. 3 is an illustrated example of actions, steps or operations which may be performed by a processing unit 110 in a vehicle as described above with reference to Fig. 1. The method may comprise the following actions, steps or operations.

**Action 301.** The processing unit 110 obtains a propulsion energy consumption, $E_{PC}$, of the vehicle 100 travelling from the source location S to the first target destination T1 along the first route R1. This means that the processing unit 110 may determine or calculate an estimated propulsion energy consumption of the vehicle 100 to reach the first target destination T1 along the first route R1. Optionally, the processing unit 110 may receive or retrieve information indicating the estimated propulsion energy consumption, for example, from a central vehicle control server (not shown) or cloud server in a wireless communications network. Furthermore, the propulsion energy consumption, $E_{PC}$, of the vehicle 100 may be obtained using a probability distribution of the estimated propulsion energy consumption of the vehicle 100 needed to reach the first target destination T1 along the first route R1. The probability distribution of the propulsion energy consumption may be determined based on a reference speed of the vehicle 100. One definition of a reference speed of the vehicle 100 is the speed that the vehicle 100 would select on a flat road when there is no disturbing traffic on said road. Also, the probability distribution of the propulsion energy consumption may further be determined based on mapping data, traffic information along the first route R1, weather information along the first route R1, and vehicle and driver behaviour information, etc. Based on the probability distribution of the propulsion energy consumption, the propulsion energy consumption, $E_{PC}$, of the vehicle 100 may be estimated to a single value having a determined level of certainty, i.e. a first determined level of certainty, $C_{L1}$. The determined level of certainty for the propulsion energy consumption of the vehicle 100 may be pre-set according to predetermined settings or configurable in the processing unit 110 upon configuration or updated remotely. Furthermore, based on the propulsion energy consumption, $E_{PC}$, of the vehicle 100, an expected driving time for the vehicle 100 to reach the first target destination T1 may also be derived.

**Action 302.** In case the amount of energy, $E_{TOTAL}$, available in the vehicle 100 is not on a level above $E_{PC}$ that ensures arrival of the vehicle 100 at the first target destination T1 according to a first determined level of certainty, $C_{L1}$, the processing unit 110 obtains an estimated energy consumption, $E_{AUX}$, of each auxiliary system 440a-440x on-board the vehicle 100 for the first route R1. The processing unit 110 also obtains an energy utilization information, $EU_{INFO}$, indicating a priority level of each auxiliary system 440a-440x on-board the vehicle 100 for the first route R1. Here, the amount of energy, $E_{TOTAL}$, available in the vehicle 100 may, for example, refer to the current State-of-Charge, SoC, of an energy storage solution, e.g. a battery pack or similar electric power source, in the vehicle 100. This means that the processing unit 110 may compare $E_{TOTAL}$ to $E_{PC}$ and make sure that $E_{TOTAL}$ is above $E_{PC}$. If so, the processing unit 110 may ensure arrival of the vehicle 100 at the first target destination T1 according to the first determined level of certainty, $C_{L1}$. However, if $E_{TOTAL}$ is below $E_{PC}$, then the processing unit 110 can not ensure arrival of the vehicle 100 at the first target destination T1 according to the first determined level of certainty, $C_{L1}$.

**EP 4 215 402 A1**

In this case, the processing unit 110 obtains the estimated energy consumption, $E_{AUX}$, of each auxiliary system 440a-440x on-board the vehicle 100 for the first route R1. According to some embodiments, each auxiliary system 440a-440x may be associated with some form of a control and monitoring function that is capable of delivering a measurement on the estimated energy consumption, $E_{AUX}$, for the first route R1. This control and monitoring function may also be capable of adapting the energy consumption of each respective auxiliary system 440a-440x if requested by the processing unit 110, e.g. reducing the energy consumption of each respective auxiliary system 440a-440x or turning it off completely.

It should further be noted that the energy consumption, $E_{AUX}$, of each auxiliary system 440a-440x may be divided into two main parts. A first part that is directly affected by the speed of the vehicle, such as, for example, the energy consumption of air drag or vehicle cooling systems. The second part is directly affected by the estimated driving time, for example, the driving time estimated by the processing unit 110 in Action 301. The latter being auxiliary systems 440a-440x that consumes roughly the same amount of power no matter of the speed of the vehicle, such as, for example, all energy consumption by electronic control units (ECUs), climate control systems, etc. However, it should also be noted that some energy consumption are more or less constant when travelling the first route R1 and therefore are neither speed nor time dependent. For example, rolling resistance or the potential energy. It is here assumed that this part will be comprised in the energy consumption, $E_{AUX}$, of each auxiliary system 440a-440x that is dependent on the speed of the vehicle 100; hence, there will be a minimum energy consumption in this first part that is actually independent from the speed of the vehicle. The energy consumption, $E_{AUX}$, of each auxiliary system 440a-440x in each of these two parts may be determined by the processing unit 110 using a probability distribution of the energy consumption, $E_{AUX}$, of the auxiliary systems 440a-440x that is affected by the speed of the vehicle 100 along the first route R1, as well as, a probability distribution of the energy consumption, $E_{AUX}$, of the auxiliary systems 440a-440x that is affected by the estimated driving time of the first route R1. Similar to the energy consumption, Ec, the energy consumption, $E_{AUX}$, of the auxiliary systems 440a-440x being dependent upon speed of the vehicle 100, as well as, the estimated driving time of the first route R1 may be estimated to a single value having a determined level of certainty, e.g. the first determined level of certainty, $C_{L1}$.

Furthermore, if $E_{TOTAL}$ is below $E_{PC}$, the processing unit 110 will also obtain energy utilization information, $EU_{INFO}$, indicating a priority level, of each auxiliary system 440a-440x on-board the vehicle 100 for the first route R1. Here, it should be noted that the relative importance of the different auxiliary system 440a-440x may not always be possible to objectively compare to each other, and thus may also be based on subjective input. In some embodiments, the processing unit 110 may receive user input from a driver of the vehicle 100 indicating the priority level of one or more of the auxiliary systems 440a-440x for the first route R1. This means that the relative importance may be provided, for example, by the driver via a user interface 450 shown in Fig. 4. However, optionally, the relative importance may also be provided by being pre-set according to predetermined settings, by being configurable in the processing unit 110 upon configuration (or updated remotely), or any combination thereof.

Optionally, it should also be noted that the overall operations of the vehicle 100 may be divided into different domains. In this case, each domain may represent an overall function that may comprise one or more overlapping or non-overlapping auxiliary systems 440a-440x. Examples of such domains may be: Comfort, Energy Cost, Range, PTO usage, etc. In this case, a control and monitoring function of the auxiliary systems 440a-440x may be configured to perform the same operation for the one or more overlapping or non-overlapping auxiliary systems 440a-440x belonging to one domain as described above for each auxiliary system 440a-440x separately.

In some embodiments, the control and monitoring function of each auxiliary system 440a-440x, or domain, may also be capable of providing a measurement on how much the utility of each auxiliary system 440a-440x, or domain, on-board the vehicle 100 is affected if energy consumption, $E_{AUX}$, of each auxiliary systems 440a-440x is reduced or turned off. For example, a control and monitoring function, $f_1(E_c, t)$, of a domain comprising one or more auxiliary systems 440a-440x associated with comfort may be provided, as well as, a control and monitoring function, $f_2(E_{PTO}, t)$, of a domain comprising one or more auxiliary systems 440a-440x associated with PTO. Based on the estimated driving time in Action 301, $f_1(E_c, t)$ and $f_2(E_{PTO}, t)$ may determine or calculate a measurement indicating how much the comfort utility and the PTO utility are affected if their respective energy consumption is reduced. Here, Ec may be an energy limit for the comfort domain, and $E_{PTO}$ may be an energy limit for the PTO domain. This information may then, for example, be provided to the processing unit 110.

**Action 303.** After obtaining $E_{PC}$, $E_{AUX}$, and $EU_{INFO}$ in Actions 301-302, the processing unit 110 determines an energy consumption adaptation sequence of the auxiliary systems 440a-440x for the first route R1 based on the obtained $E_{AUX}$ and $EU_{INFO}$ of each auxiliary system 440a-440x. This is performed such that $E_{TOTAL}$ is maintained on a level above $E_{PC}$ that ensures arrival of the vehicle 100 at the first target destination T1 according to a second determined level of certainty $C_{L2}$. This advantageously enables the actual energy consumption onboard the vehicle 100 to be adjusted to only provide a sufficient range or energy in order for the vehicle 100 to be able to reach the first target destination T1 with a determined level of certainty; this, instead of adjusting the energy consumption such that maximum range or energy is obtained as in common prior art solutions. Here, it should be noted that that the second determined level of certainty $C_{L2}$ may be the same or different from the first determined level of certainty $C_{L1}$.

7

As indicated in the example below, the processing unit 110 may determine a first required reduction in energy consumption of the auxiliary systems 440a-440x for the first route R1 in order to maintain $E_{TOTAL}$ on a level above $E_C$ that ensures arrival of the vehicle 100 at the first target destination T1 according to the second determined level of certainty $C_{L2}$. Here, the processing unit 110 may also determine the energy consumption adaption sequence of the auxiliary systems 440a-440x for the first route R1 based on the obtained $E_{AUX}$ and $EU_{INFO}$ of each auxiliary system 440a-440x such that the first required reduction in energy consumption is reached.

For example, based on the $f_1(E_C, t)$ and $f_2(E_{PTO}, t)$ as described above in Action 302, the processing unit 110 may determine an overall utility function for the auxiliary systems 440a-440x, or domains, over which to maximize the overall utility, Eq. 1:

$$\underset{E_C, E_{PTO}}{\arg\max} \lambda_{Comfort} f_1(E_C, t) + \lambda_{PTO} f_2(E_{PTO}, t) + (\ (E_C + E_{PTO} + PropulsionEnergyNeed) <= availableEnergy)$$

wherein $\lambda_{Comfort}$ is a numeral indicating the priority level of the domain comprising one or more auxiliary systems 440a-440x associated with comfort, and $\lambda_{PTO}$ is a numeral indicating the priority level of the domain comprising one or more auxiliary systems 440a-440x associated with PTO, which may be obtain from $EU_{INFO}$. According to some embodiments, the processing unit 110 determine $EU_{INFO}$ at least partly based on the received user input. This, for example, in case the processing unit 110 received user input from a driver of the vehicle 100 indicating the priority level of one or more of the auxiliary systems 440a-440x for the first route R1 as described in Action 302. Thus, the first term in Eq. 1 corresponds to the comfort domain utility, and the second term corresponds to the PTO domain utility. Here, it should be noted that the comfort domain utility and PTO domain utility may be replaced with the utility of one or more individual auxiliary systems 440a-440x.

In the last term in Eq. 1, the PropulsionEnergyNeed corresponds to $E_{PC}$ and availableEnergy corresponds to $E_{TOTAL}$. Hence, this last term corresponds to the utility of reaching the first target destination T1. In other words, this last term corresponds to the utility of having more or equal amounts of available energy to reach the first target destination T1. In this case, the control variables are the energy limit for the comfort domain, $E_C$, and the energy limit for the PTO domain, $E_{PTO}$. Here, the processing unit 110 may maximizes this overall utility function of Eq.1 to obtain the energy consumption adaptation sequence of the auxiliary systems 440a-440x for the first route R1 based on the obtained $E_{AUX}$ and $EU_{INFO}$ of each auxiliary system 440a-440x.

In this case, the processing unit 110 may then send the determined energy limits for the comfort domain, $E_C$, and for the PTO domain, $E_{PTO}$ to one or more control and monitoring function(s) of the one or more auxiliary systems 440a-440x associated with PTO domain and the one or more auxiliary systems 440a-440x associated with comfort domain. The one or more control and monitoring function(s) of the comfort and PTO domain may then control the actuators of the one or more auxiliary systems 440a-440x associated with each of the comfort and PTO domains, respectively, in such a way that the determined energy limits Ec and $E_{PTO}$ are not exceeded.

In the example presented above and for illustrative purposes, a simplified example is provided in which a reference speed is given/pre-set and is not used a control parameter. However, according some embodiments, a more advanced optimization in which the reference speed is a control parameter that may be varied is also envisioned. For example, the reference speed may also here be adapted and controlled so as to ensure a sufficient range, e.g. a decrease in speed, or to fulfil arrival time constraints, e.g. increase in speed.

Further, in the example presented above, the optimization of the overall utility function for the auxiliary systems 440a-440x, or domains, is also shown as deterministic. Here, a stochastic optimization may also be used to optimize the overall utility function for the auxiliary systems 440a-440x, or domains. Here, it should be noted that any combinations of these different embodiments are also possible. For example, a stochastic optimization may be performed in combination with a given reference speed, or a deterministic optimization that comprise the reference speed as control parameter that may be varied, or any other combination of deterministic functions and probability distributions in the terms in the overall utility function for the auxiliary systems 440a-440x, or domains.

It should also be noted that other types of effects on the overall utility may also be included in the overall utility function for the auxiliary systems 440a-440x, or domains, such as, for example, determine the utility consequences of being outside the conventional SoC window of an energy source or battery on-board the vehicle 100. If these consequences may be modelled with a reasonable accuracy, the utility in terms of extra battery wear could be compared to the gain in terms of range prolongation/energy savings. In other words, if the extra battery wear is acceptable, then a higher energy consumption of the auxiliary systems 440a-440x, or domains, may be allowed.

As indicated by the flowchart in Fig. 3, the Actions 301-303 may be repeated continuously in order to ensure that $E_{TOTAL}$ is maintained on a level above $E_{PC}$ that ensures arrival of the vehicle 100 at the first target destination T1 according to a second determined level of certainty $C_{L2}$. If this is not possible, the processing unit 110 may proceed to Action 304.

**Action 304.** Optionally, the processing unit 110 may, in case the first required reduction in energy consumption of the auxiliary systems 440a-440x for the first route R1 is not enough to maintain $E_{TOTAL}$ on a level above $E_{PC}$ that ensures arrival of the vehicle 100 at the first target destination T1 according to the second determined level of certainty $C_{L2}$, obtain a second route R2 and second target destination T2 for which a second reduction in energy consumption of the auxiliary systems 440a-440x for the second route R2 is enough to maintain $E_{TOTAL}$ on a level above Ec that ensures arrival of the vehicle 100 at the second target destination T2 according to the second determined level of certainty $C_{L2}$. This means that an alternative route, i.e. the second route R2, and also an alternate destination, i.e. the first target destination T1, may be determined in case the energy savings from the first required reduction in energy consumption of the auxiliary systems 440a-440x is not enough for the first route R1.

**Action 305.** Optionally, after obtaining the second route R2 and the second target destination T2 in Action 304, the processing unit 110 may display, via a user interface 450 on a display 460 as shown in Fig. 4, information to the driver of the vehicle 100 indicating the second route R2 and the second target destination T2. This means that this information may be indicated to the driver of the vehicle 100 so that the driver may follow the alternative route to the alternate destination, i.e. the second route R2 to the second target destination T2, so as to ensure arrival at the alternate destination with a determined level of certainty. One example of how this may be performed is shown in Fig. 2 by the virtual map indicating and suggesting the second route R2 and the second target destination T2. However, this may also be presented to the driver via a user interface 450 shown in Fig. 4, in one of several different ways, e.g. using text and/or images.

Alternatively, the processing unit 110 may, according to some embodiments, display, via a user interface 450 on a display 460 as shown in Fig. 4, information indicating the determined energy consumption adaption sequence of the auxiliary systems 440a-440x for the first route R1 to the driver of the vehicle 100. This means that the driver may be informed about which auxiliary systems 440a-440x that will be affected by the determined energy consumption adaption sequence in order for the vehicle 100 to be able to reach a first target destination T1 with a determined level of certainty. This may also be presented to the driver via a user interface 450 shown in Fig. 4, in one of several different ways, e.g. using text and/or images. This may also enable the driver of the vehicle 100 to reject the determined energy consumption adaption sequence of the auxiliary systems 440a-440x for the first route R1 if the driver of the vehicle 100 considers that the determined energy consumption adaption sequence is not suitable.

According to another option, the processing unit 110 may in some embodiments display, via a user interface 450 on a display 460 as shown in Fig. 4, information indicating driving assisting actions for reducing $E_{PC}$ to the driver of the vehicle 100. This means that the driver may, for example, be supported by suitable driving instructions that will reduce the propulsion energy consumption, $E_{PC}$, of the vehicle 100 and/or auxiliary systems 440a-440x in order for the vehicle 100 to be able to reach a first target destination T1 with a determined level of certainty. This may also be presented to the driver via a user interface 450 shown in Fig. 4, in one of several different ways, e.g. using text and/or images. For example, the suitable driving instructions may comprise information indicating to the driver of the vehicle 100 to perform one or more suitable driving action in order reduce the propulsion energy consumption of the vehicle 100, such as, e.g. change reference speed, change driving mode, select the second route R2 to second target destination T2, etc.

The suitable driving instructions may also comprise information indicating to the driver of the vehicle 100 to perform one or more suitable driving action in order reduce the energy consumption, $E_{AUX}$, of the auxiliary systems 440a-440x, such as, e.g. disconnect your USB devices, shut of the display 460, manually deactivation of non-vital on-board systems, manually reduce the energy consumption, $E_{AUX}$, of the auxiliary systems 440a-440x, etc. Other suitable driving instructions that may be indicated, but which do not necessarily reduce the energy consumption in the vehicle 100, may comprise, for example, "call towing service in advance" when the second route R2 to second target destination T2 is selected.

To perform the method actions for managing energy consumption in a vehicle 100 along a first route R1 from a source location S to a first target destination T1, the processing unit 110 may comprise the following arrangement depicted in **Fig. 4.** Fig. 4 shows a schematic block diagram of embodiments of the processing unit 110.

Here, the processing unit 110 may be integrated in an on-board network of the vehicle 100 interfacing with each of the auxiliary systems 440a-440x, e.g. via an I/O module 430. The I/O module 430 may be connected to or be integrated with the CAN bus on-board the vehicle 100. Optionally, I/O module 430 may also be arranged to communicate with an on-board connectivity device, OCD (not shown), that may provide access to a wireless communications network, e.g. WiFi or mobile communications network, for communicating with a cloud network server. In some embodiments, the processing unit 110 may also comprise a user interface 450, e.g. a Human Machine Interface or Graphical User Interface, HMI/GUI, comprising a display. It should also be noted that, although not shown in Fig. 4, known conventional features for operating the processing unit 110, such as, for example, a connection to a power source, e.g. a battery or other on-board power source, may be assumed to be comprised in the processing unit 110, but is not shown or described in any further detail in regards to Fig. 5.

The processing unit 110 may comprise **processing circuitry 410** and a **memory 420**. It should also be noted that some or all of the functionality described in the embodiments above as being performed by the processing unit 110 may be provided by the processing circuitry 410 executing instructions stored on a computer-readable medium, such as, e.g. the memory 420 shown in Fig. 4. Alternative embodiments of the processing unit 110 may comprise additional components, such as, for example, an **estimating module 411,** an **obtaining module 412,** and a **determining module 413,** whereby each module may be configured and responsible for providing its dedicated functionality to support the embodiments described herein.

The processing unit 110 or processing circuitry 410 is configured to, or may comprise the estimating module 411 being configured to, estimate an energy consumption, $E_{PC}$, of the vehicle 100 travelling from the source location S to the first target destination T1 along the first route R1. Also, the processing unit 110 or processing circuitry 410 is configured to, or may comprise the obtaining module 412 being configured to, obtain, in case the amount of energy, $E_{TOTAL}$, available in the vehicle 100 is not on a level above $E_{PC}$ that ensures arrival of the vehicle 100 at the first target destination T1 according to a first determined level of certainty $C_{L1}$, an estimated energy consumption, $E_{AUX}$, of each auxiliary system 440a-440x on-board the vehicle 100 for the first route R1, and an energy utilization information, $EU_{INFO}$, indicating a priority level of each auxiliary system 440a-440x on-board the vehicle 100 for the first route R1. Further, the processing unit 110 or processing circuitry 410 is configured to, or may comprise the determining module 413 being configured to, determine an energy consumption adaption sequence of the auxiliary systems 440a-440x for the first route R1 based on the obtained $E_{AUX}$ and $EU_{INFO}$ of each auxiliary system 440a-440x such that $E_{TOTAL}$ is maintained on a level above $E_{PC}$ that ensures arrival of the vehicle 100 at the first target destination T1 according to a second determined level of certainty $C_{L2}$.

In some embodiments, the processing unit 110 or processing circuitry 410 may be configured to, or may comprise the obtaining module 411 being configured to, receive, via the user interface 450, user input from a driver of the vehicle 100 indicating the priority level of one or more of the auxiliary systems 440a-440x for the first route R1. Here, the processing unit 110 or processing circuitry 410 may be configured to, or may comprise the determining module 413 being configured to, determine $EU_{INFO}$ at least partly based on the received user input.

Optionally, in some embodiments, the processing unit 110 or processing circuitry 410 may be configured to, or may comprise the determining module 411 being configured to, determine a first required reduction in energy consumption of the auxiliary systems 440a-440x for the first route R1 in order to maintain $E_{TOTAL}$ on a level above $E_{PC}$ that ensures arrival of the vehicle 100 at the first target destination T1 according to the second determined level of certainty $C_{L2}$. Here, the processing unit 110 or processing circuitry 410 may also be configured to, or may comprise the determining module 411 being configured to, determine the energy consumption adaption sequence of the auxiliary systems 440a-440x for the first route R1 based on the obtained $E_{AUX}$ and $EU_{INFO}$ of each auxiliary system 440a-440x such that first required reduction in energy consumption of the auxiliary systems 440a-440x for the first route R1 is reached.

Further, in some embodiments, the processing unit 110 or processing circuitry 410 may be configured to, or may comprise the obtaining module 412 being configured to, obtain, in case the first required reduction in energy consumption of the auxiliary systems 440a-440x for the first route R1 is not enough to maintain $E_{TOTAL}$ on a level above $E_{PC}$ that ensures arrival of the vehicle 100 at the first target destination T1 according to the second determined level of certainty $C_{L2}$, a second route R2 and second target destination T2 for which a second reduction in energy consumption of the auxiliary systems 440a-440x for the second route R2 is enough to maintain $E_{TOTAL}$ on a level above $E_{PC}$ that ensures arrival of the vehicle 100 at the second target destination T2 according to the determined level of certainty $C_{L2}$.

According to some embodiments, the processing unit 110 or processing circuitry 410 may be configured to, or may comprise the displaying module 414 being configured to, display, via the user interface 450, one or more of: information indicating the determined energy consumption adaption sequence of the auxiliary systems 440a-440x for the first route R1 to the driver of the vehicle 100, information to the driver of the vehicle 100 indicating the second route R2 and the second target destination T2, and information indicating driving assisting actions for reducing $E_{PC}$ to the driver of the vehicle 100. In some embodiments, the auxiliary system 440a-440x on-board the vehicle 100 comprise one or more of: electronic control units, ECUs; a climate control system; an thermal Energy Storage System, ESS; an air pressure system; a Power Take-off, PTO, system; and a cabin comfort system.

Furthermore, the embodiments for managing energy consumption in a vehicle 100 along a first route R1 from a source location S to a first target destination T1 described above may be at least partly implemented through one or more processors, such as, the processing circuitry 410 in the processing unit 110 depicted in Fig. 4, together with computer program code for performing the functions and actions of the embodiments herein. The program code mentioned above may also be provided as a computer program product, for instance in the form of a data carrier carrying computer program code or code means for performing the embodiments herein when being loaded into the processing circuitry 410 in the processing unit 110. The data carrier, or computer readable medium, may be one of an electronic signal, optical signal, radio signal or computer-readable storage medium. The computer program code may e.g. be provided as pure program code in the processing unit 110 or on a server and downloaded to the processing unit 110. Thus, it should be noted that the functions of the processing unit 110 may in some embodiments be implemented as computer programs stored in memory 420 in Fig. 4, e.g. a computer readable storage unit, for execution by processors or processing modules, e.g. the processing circuitry 410 in the processing unit 110 of Fig. 4.

Those skilled in the art will also appreciate that the processing circuitry 410 and the memory 420 described above may refer to a combination of analog and digital circuits, and/or one or more processors configured with software and/or firmware, e.g. stored in a memory, that when executed by the one or more processors such as the processing circuitry 410 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems and computer program products. It should be appreciated that the example embodiments presented herein may be practiced in any combination with each other. It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware. It should also be noted that the various example embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures and program modules represent examples of program code for executing steps of the methods disclosed herein. The particular sequence of such executable instructions or associated data structures represents examples of corresponding acts for implementing the functions described in such steps or processes. The embodiments herein are not limited to the above described preferred embodiments. Various alternatives, modifications and equivalents may be used. Therefore, the above embodiments should not be construed as limiting.

**Claims**

1. A method performed by a processing unit (110) for managing energy consumption in a vehicle (100) along a first route (R1) from a source location (S) to a first target destination (T1), wherein the method comprise:

   *estimating* (301) a propulsion energy consumption, $E_{PC}$, of the vehicle (100) travelling from the source location (S) to the first target destination (T1) along the first route (R1);
   *obtaining* (302), in case the amount of energy, $E_{TOTAL}$, available in the vehicle (100) is not on a level above $E_{PC}$ that ensures arrival of the vehicle (100) at the first target destination (T1) according to a first determined level of certainty ($C_{L1}$), an estimated energy consumption, $E_{AUX}$, of each auxiliary system (440a-440x) on-board the vehicle (100) for the first route (R1), and an energy utilization information, $EU_{INFO}$, indicating a priority level of each auxiliary system (440a-440x) on-board the vehicle (100) for the first route (R1); and
   *determining* (303) an energy consumption adaptation sequence of the auxiliary systems (440a-440x) for the first route (R1) based on the obtained $E_{AUX}$ and $EU_{INFO}$ of each auxiliary system (440a-440x) such that $E_{TOTAL}$ is maintained on a level above $E_{PC}$ that ensures arrival of the vehicle (100) at the first target destination (T1) according to a second determined level of certainty ($C_{L2}$).

2. The method according to claim 1, wherein the *obtaining* (302) further comprises receiving, via a user interface (450), user input from a driver of the vehicle (100) indicating the priority level of one or more of the auxiliary systems (440a-440x) for the first route (R1), and the *determining* (303) further comprises determining $EU_{INFO}$ at least partly based on the received user input.

3. The method according to claim 1 or 2, wherein the *determining* (303) further comprises determining a first required reduction in energy consumption, $E_R$, of the auxiliary systems (440a-440x) for the first route (R1) in order to maintain $E_{TOTAL}$ on a level above $E_{PC}$ that ensures arrival of the vehicle (100) at the first target destination (T1) according to the second determined level of certainty ($C_{L2}$), and determining the energy consumption adaption sequence of the auxiliary systems (440a-440x) for the first route (R1) based on the obtained $E_{AUX}$ and $EU_{INFO}$ of each auxiliary system (440a-440x) such that $E_R$ is reached.

4. The method according to claim 3, further comprising:
*obtaining* (304), in case the first required reduction in energy consumption, $E_R$, of the auxiliary systems (440a-440x) for the first route (R1) is not enough to maintain $E_{TOTAL}$ on a level above $E_{PC}$ that ensures arrival of the vehicle (100) at the first target destination (T1) according to the second determined level of certainty ($C_{L2}$), a second route (R2) and second target destination (T2) for which a second reduction in energy consumption, $E_{R2}$, of the auxiliary systems (440a-440x) for the second route (R2) is enough to maintain $E_{TOTAL}$ on a level above $E_{PC}$ that ensures arrival of the vehicle (100) at the second target destination (T2) according to the second determined level of certainty ($C_{L2}$).

5. The method according to any of claims 1-4, further comprising:
*displaying* (306), via a user interface (450), one or more of: information indicating the determined energy consumption adaption sequence of the auxiliary systems (440a-440x) for the first route (R1) to the driver of the vehicle (100); information to the driver of the vehicle (100) indicating the second route (R2) and the second target destination (T2); and information indicating driving assisting actions for reducing $E_{PC}$ to the driver of the vehicle (100).

6. The method according to any of claims 1-5, wherein the auxiliary system (440a-440x) on-board the vehicle (100) comprise one or more of: electronic control units , ECUs; a climate control system; an thermal Energy Storage System, ESS; an air pressure system; a Power Take-off, PTO, system; and a cabin comfort system.

7. A processing unit (110) for managing energy consumption in a vehicle (100) along a first route (R1) from a source location (S) to a first target destination (T1), wherein the processing unit (110) is configured to:
estimate an energy consumption, $E_{PC}$, of the vehicle (100) travelling from the source location (S) to the first target destination (T1) along the first route (R1), obtain, in case the amount of energy, $E_{TOTAL}$, available in the vehicle (100) is not on a level above $E_{PC}$ that ensures arrival of the vehicle (100) at the first target destination (T1) according to a first determined level of certainty ($C_{L1}$), an estimated energy consumption, $E_{AUX}$, of each auxiliary system (440a-440x) on-board the vehicle (100) for the first route (R1), and an energy utilization information, $EU_{INFO}$, indicating a priority level of each auxiliary system (440a-440x) on-board the vehicle (100) for the first route (R1), and determine an energy consumption adaption sequence of the auxiliary systems (440a-440x) for the first route (R1) based on the obtained $E_{AUX}$ and $EU_{INFO}$ of each auxiliary system (440a-440x) such that $E_{TOTAL}$ is maintained on a level above $E_{PC}$ that ensures arrival of the vehicle (100) at the first target destination (T1) according to a second determined level of certainty ($C_{L2}$).

8. The processing unit (110) according to claim 7, further configured to receive, via a user interface (450), user input from a driver of the vehicle (100) indicating the priority level of one or more of the auxiliary systems (440a-440x) for the first route (R1), and determine $EU_{INFO}$ at least partly based on the received user input.

9. The processing unit (110) according to claim 7 or 8, further configured to determine a first required reduction in energy consumption of the auxiliary systems (440a-440x) for the first route (R1) in order to maintain $E_{TOTAL}$ on a level above $E_{PC}$ that ensures arrival of the vehicle (100) at the first target destination (T1) according to the second determined level of certainty ($C_{L2}$), and determine the energy consumption adaption sequence of the auxiliary systems (440a-440x) for the first route (R1) based on the obtained $E_{AUX}$ and $EU_{INFO}$ of each auxiliary system (440a-440x) such that the first required reduction in energy consumption of the auxiliary systems (440a-440x) for the first route (R1) is reached.

10. The processing unit (110) according to claim 9, further configured to obtain, in case the first required reduction in energy consumption of the auxiliary systems (440a-440x) for the first route (R1) is not enough to maintain $E_{TOTAL}$ on a level above $E_{PC}$ that ensures arrival of the vehicle (100) at the first target destination (T1) according to the second determined level of certainty ($C_{L2}$), a second route (R2) and second target destination (T2) for which a second reduction in energy consumption of the auxiliary systems (440a-440x) for the second route (R2) is enough to maintain $E_{TOTAL}$ on a level above $E_{PC}$ that ensures arrival of the vehicle (100) at the second target destination (T2) according to the determined level of certainty ($C_{L2}$).

**11.** The processing unit (110) according to any of claims 7-10, further configured to display, via a user interface (450), one or more of: information indicating the determined energy consumption adaption sequence of the auxiliary systems (440a-440x) for the first route (R1) to the driver of the vehicle (100), information to the driver of the vehicle (100) indicating the second route (R2) and the second target destination (T2), and information indicating driving assisting actions for reducing $E_{PC}$ to the driver of the vehicle (100).

**12.** The processing unit (110) according to any of claims 7-11, wherein the auxiliary system (440a-440x) on-board the vehicle (100) comprises one or more of:
electronic control units, ECUs; a climate control system; a thermal Energy Storage System, ESS; an air pressure system; a Power Take-off, PTO, system; and a cabin comfort system.

**13.** A computer program comprising program code means for performing the steps of any of claims 1-6 when said program is run on a computer or in a processing circuitry (110).

**14.** A computer program carrier carrying a computer program according to claim 13, wherein the computer program carrier is one of an electronic signal, optical signal, radio signal or computer-readable storage medium.

**15.** A vehicle (100) comprising processing unit (110) according to any of claims 7-12.

FIG. 1

FIG. 2

**301**

**302**

**303**

**304**

**305**

# FIG. 3

**110**

**411** Estimating module

**412** Obtaining module

**413** Determining module

**414** Displaying module

**410** Processing circuitry

**420** Memory

**430** I/O

**450** GUI

**450** Display

**440a**

**440x**

# FIG. 4

Europäisches
Patentamt

European
Patent Office

Office européen
des brevets

# EUROPEAN SEARCH REPORT

Application Number

EP 22 15 2424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2012 023632 A1 (VOLKSWAGEN AG [DE]) 5 June 2014 (2014-06-05) * paragraphs [0012] – [0020], [0026], [0061]; claims 1,7,13; figure 5 * | 1-15 | INV. B60L1/00 G01C21/34 G01C21/36 B60W50/00 |
| X | US 2020/117204 A1 (LINDEMANN TODD P [US] ET AL) 16 April 2020 (2020-04-16) * paragraphs [0012], [0017], [0040]; claims 1, 15 * | 1,3,5-7, 9,11,12, 14,15 | |
| X | US 2018/203443 A1 (NEWMAN AUSTIN L [US]) 19 July 2018 (2018-07-19) * paragraphs [0107] – [0108]; claim 1 * | 1,3,6,7, 9,12,14, 15 | |
| A | US 2012/179420 A1 (GILMAN DALE [US] ET AL) 12 July 2012 (2012-07-12) * paragraphs [0035] – [0036] * | 4,10 | |

TECHNICAL FIELDS SEARCHED (IPC)

B60L
G01C
B60W

The present search report has been drawn up for all claims

| Place of search | Date of completion of the search | Examiner |
|---|---|---|
| The Hague | 1 July 2022 | Pascheka, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 2424

This annex lists the patent family members relating to the patent documents cited in  the above-mentioned European search report.
The members are as contained in the European Patent Office EDP file on
The European Patent Office is in no way liable for these particulars which are merely given for the purpose of information.

01-07-2022

| Patent document cited in search report | Publication date | Patent family member(s) | Publication date |
|---|---|---|---|
| DE 102012023632 A1 | 05-06-2014 | NONE | |
| US 2020117204 A1 | 16-04-2020 | CN 111055850 A<br>DE 102019115030 A1<br>US 2020117204 A1 | 24-04-2020<br>16-04-2020<br>16-04-2020 |
| US 2018203443 A1 | 19-07-2018 | NONE | |
| US 2012179420 A1 | 12-07-2012 | CN 102589566 A<br>DE 102012200112 A1<br>US 2012179420 A1<br>US 2017184413 A1 | 18-07-2012<br>12-07-2012<br>12-07-2012<br>29-06-2017 |

EPO FORM P0459

For more details about this annex : see Official Journal of the European Patent Office, No. 12/82